(19) Europäisches Patentamt
European Patent Office
Office européen des brevets

(11) EP 4 433 418 B1

(12) EUROPEAN PATENT SPECIFICATION

(45) Date of publication and mention of the grant of the patent:
**27.08.2025 Bulletin 2025/35**

(21) Application number: **22818696.1**

(22) Date of filing: **18.11.2022**

(51) International Patent Classification (IPC):
***C01B 17/45*** *(2006.01)* ***C01B 21/083*** *(2006.01)*
***C01B 21/093*** *(2006.01)* ***H01M 10/0568*** *(2010.01)*
***H01M 10/052*** *(2010.01)*

(52) Cooperative Patent Classification (CPC):
**C01B 21/083; C01B 21/0935; H01M 10/052; H01M 10/0568;** C01P 2004/53; C01P 2004/61

(86) International application number:
**PCT/EP2022/082382**

(87) International publication number:
**WO 2023/089084 (25.05.2023 Gazette 2023/21)**

(54) **DRY DISPERSION OF AMMONIUM BIS(FLUOROSULFONYL)IMIDE (NH4FSI) SALT WITH AN AT LEAST BIMODAL PARTICLE SIZE DISTRIBUTION**

TROCKENE DISPERSION VON AMMONIUM-BIS(FLUORSULFONYL)IMID(NH4FSI)-SALZ MIT MINDESTENS EINER BIMODALEN PARTIKELGRÖSSENVERTEILUNG

DISPERSION SÈCHE DE SEL DE BIS(FLUOROSULFONYL)IMIDE D’AMMONIUM (NH4FSI) AVEC UNE DISTRIBUTION DE PARTICULE AU MOINS BIMODALE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **19.11.2021 EP 21315245**

(43) Date of publication of application:
**25.09.2024 Bulletin 2024/39**

(73) Proprietor: **SPECIALTY OPERATIONS FRANCE**
**69003 Lyon (FR)**

(72) Inventor: **KANG, Joo-Hee**
**69002 LYON (FR)**

(74) Representative: **Viola, Laura Maria**
**Syensqo S.A.**
**Viale Lombardia, 20**
**20021 Bollate (MI) (IT)**

(56) References cited:
**WO-A1-2018/147195**
**US-A1- 2016 289 074**
**US-A1- 2019 276 311**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 433 418 B1

## Description

### Technical field

The present disclosure relates to dry dispersion of ammonium bis(fluorosulfonyl)imide ($NH_4FSI$) salt of formula (I):

$$[F\text{-}SO_2\text{-}N^-\text{-}SO_2\text{-}F],\ NH_4^+ \qquad (I)$$

characterized by having at least two particle size fractions, i.e. a small-size fraction and a large-size fraction. The present disclosure also relates to the use of such dispersion to prepare a salt of bis(fluorosulfonyl)imide selected from the group consisting of a lithium slat, a sodium salt or a potassium salt.

### Background

Bis(fluorosulfonyl)imide and salts thereof, in particular the lithium salt of bis(fluorosulfonyl)imide (LiFSI), are useful compounds in a variety of technical fields, notably for battery electrolytes.

The production of bis(fluorosulfonyl)imide (FSI) and salts thereof is described in the literature. One of the possible intermediates leading to FSI salts of interest is ammonium bis(fluorosulfonyl)imide ($NH_4FSI$). For example, WO 2017/090877 A1 (CLS) describes a method for producing lithium bis(fluorosulfonyl)imide comprising the steps of: (1) reacting bis(chlorosulfonyl)imide with a fluorinating reagent in a solvent, followed by treatment with an alkaline reagent, thereby producing $NH_4FSI$; and (2) reacting the $NH_4FSI$ with a lithium base.

Because intermediates, such as $NH_4FSI$ salts, are engaged into further manufacturing steps and sometimes need to be moved from one area of the plant to another, it is convenient to have them in form of dry dispersions or powders.

WO 2018/147195 A1 (Morita & Nippon Shokubai) relates to dry powders of bis (fluorosulfonyl) imide metal salt having a particle diameter of not less than 0.2 mm. It also relates to methods for preparing such powders comprising shaping the salt in molten state. The powders are heated and melted to be in molten state, and then shaped using any available method, including dry processes and wet processes (drum flake granulation method, casting method, roll-drop steel belt granulation method, prilling tower granulation method, melt crystallisation...).

US 2016/0289074 A1 (Nippon Soda) relates to granules or powders of a di(sulfonylamide) salt, such as a di(sulfonylamide) alkali metal salt or a di(sulfonylamide) ammonium salt. The granules or powders in this document consist of a compound of formula [I]:

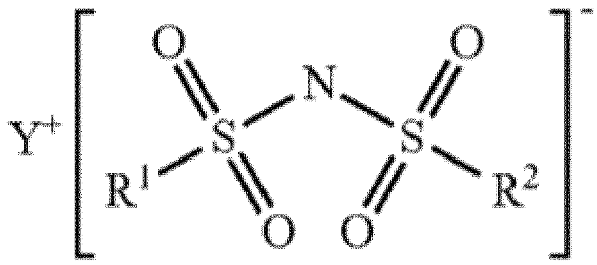

wherein $R^1$ and $R^2$ each independently represents a fluoroalkyl group having 1 to 6 carbon atoms, or a fluorine atom, and $Y^+$ represents an alkali metal cation or an ammonium cation, wherein the granules have a modal diameter of less than 80 μm and a median diameter of less than 45 μm, for example between 5 and 45 μm.

US 2019/0276311 A1 (Nippon Shokubai) relates to a method for producing a FSI metal salt, comprising the reaction of bis(fluorosulfonyl)imide (HFSI) with an alkali metal halide in a reaction solution including an organic solvent, and a purification step by filtration of the FSI salt obtained therefrom. The filtering is preferably performed by using a filter medium having retained particle diameter of 0.1 to 10 μm.

None of these documents describe the $NH_4FSI$ salts dispersions of the present invention, having at least two particle size fractions, and therefore a flowability and a dissolution into various solvents which make them well-suited to be stocked and engaged into further manufacturing processes.

### Summary

The present invention relates to a dry dispersion of ammonium bis(fluorosulfonyl)imide ($NH_4FSI$) salt of formula (I):

$$[F\text{-}SO_2\text{-}N^-\text{-}SO_2\text{-}F],\ NH_4^+ \qquad (I)$$

wherein the $NH_4FSI$ salt is possibly in a form of a solvate comprising:

- 50 to 99.9 wt.%, of the $NH_4FSI$ salt, and
- 0.1 to 50 wt.%, of solvent $S_2$, which is selected from the group consisting of cyclic and acyclic ethers,

wherein the dry dispersion comprises at least two particle size fractions, i.e. a small-size fraction and a large-size fraction.

The present invention also relates to a process for preparing a bis(fluorosulfonyl)imide (MFSI) salt of formula (II):

$$[F\text{-}SO_2\text{-}N^-\text{-}SO_2\text{-}F],\ M^+ \qquad (II)$$

wherein M is selected from the group consisting of Li, Na and K,
wherein the process comprises reacting the dry dispersion of ammonium bis(fluorosulfonyl)imide ($NH_4FSI$) salt of formula (I) described herein with a compound (C) selected from the group consisting of lithium compounds, sodium compounds and potassium compounds.

Another aspect of the present invention is the dry dispersion of bis(fluorosulfonyl)imide (MFSI) salt of formula (II):

$$[F\text{-}SO_2\text{-}N^-\text{-}SO_2\text{-}F],\ M^+ \qquad (II)$$

wherein M is selected from the group consisting of Li, Na and K, and comprises at least two particle size fractions. Such dispersion may be obtained from the process described herein.

## Disclosure of the invention

In the present application :

- any description, even though described in relation to a specific embodiment, is applicable to and interchangeable with other embodiments of the present invention;
- where an element or component is said to be included in and/or selected from a list of recited elements or components, it should be understood that in related embodiments explicitly contemplated here, the element or component can also be any one of the individual recited elements or components, or can also be selected from a group consisting of any two or more of the explicitly listed elements or components; any element or component recited in a list of elements or components may be omitted from such list; and
- any recitation herein of numerical ranges by endpoints includes all numbers subsumed within the recited ranges as well as the endpoints of the range and equivalents.

The dry dispersion of ammonium bis(fluorosulfonyl)imide ($NH_4FSI$) salt of the present invention is characterized in that it comprises at least two particle size fractions, i.e. a small-size fraction and a large-size fraction. The dispersion of the present invention may comprise more than two fractions. Preferably, the dispersion of the present invention is characterized by a bimodal particle size distribution. The fractions may be characterized by various Particle Size Distribution (PSD) parameters, for example their $d_{50}$-value. Also called D50, the $d_{50}$-value is known as the median diameter or the medium value of the PSD. It is the value of the particle diameter at 50% in the cumulative distribution. It means that 50 vol.% of the particles in the sample are larger than the $d_{50}$-value, and that 50 vol.% of the particles in the sample are smaller than the $d_{50}$-value.

In some preferred embodiments, the small-size fraction has a $d_{50}$-value of less than 120 μm, for example less than 115 μm, less than 110 μm, less than 105 μm or even less than 100 μm, as determined by laser diffraction in n-hexane.

The small-size fraction may also be such that:

- its $d_{10}$-value is not less than 20 μm, preferably between 30 and 100 μm, more preferably between 40 and 95 μm, even more preferably between 60 and 90 μm; and/or
- its $d_{50}$-value is between 80 and 115 μm, preferably between 85 and 110 μm, more preferably between 90 and 105 μm.

In some other preferred embodiments, the large-size fraction has a $d_{50}$-value of more than 200 μm, more than 210 μm, more than 220 μm or even more than 230 μm, as determined by laser diffraction in n-hexane.

The large-size fraction may also be such that:

- its $d_{50}$-value is between 200 and 250 μm, preferably between 205 and 245 μm, more preferably between 210 and 240 μm;
- its $d_{90}$-value is between 260 and 300 μm, preferably between 265 and 290 μm, more preferably between 275 and 285 μm; and/or
- its $d_{99}$-value is between 300 and 400 μm, preferably between 310 and 380 μm.

The volume ratio of the small particles to the large particles may be from 5:95 to 95:5, from 10:90 to 90:10 or from 20:80 to 80:20. The volume ratio may be determined by software calculations, for example using SYMPATEC®.

The PSD of the dry dispersion of the present invention may preferably be such that:

- its $d_{10}$-value is not less than 20 μm, preferably between 30 and 100 μm, more preferably between 40 and 95 μm, even more preferably between 60 and 90 μm;
- its $d_{50}$-value is between 140 and 190 μm, preferably between 145 and 185 μm, more preferably between 150 and 180 μm;
- its $d_{90}$-value is between 260 and 300 μm, preferably between 265 and 290 μm, more preferably between 275 and 285 μm; and/or
- its $d_{99}$-value is between 300 and 400 μm, preferably between 310 and 380 μm, as determined by laser diffraction in n-hexane.

In some embodiments, the aspect ratio defined as the average ratio of Feret's minimum length to the Feret's maximum length, as counted on about 60 particles from a scanning electron microscopy (SEM) image) of the dry dispersion ranges between 0.3 and 1.0, preferably between 0.5 and 0.95, even more preferably between 0.7 and 0.9.

The small-size and large-size fractions of the present invention may also be characterized by their particle diameter Dp at the peak of the volume-based particle size distribution.

In some embodiments, the particle diameter Dp at the peak of the small-size fraction is between 80 and 115 μm, preferably between 85 and 110 μm, more preferably between 90 and 105 μm.

In some embodiments, the particle diameter Dp at the peak of the large-size fraction is between 200 and 250 μm, preferably between 205 and 245 μm, more preferably between 210 and 240 μm.

The dispersion of the present invention may be such that it has a shape being at least one selected from the group consisting of a quadrilateral-like shape, a monoclinic-like shape, a sphere-like shape, a rod-like shape, a needle-like shape and mixtures thereof. Preferably, it has a shape being at least two selected from the group consisting of a quadrilateral-like shape, a monoclinic-like shape, a sphere-like shape, a rod-like shape, a needle-like shape and mixtures thereof.

In some embodiments, the dispersion has a shape such that:

- a small fraction $F_s$ is a rod-like shape and/or a needle-like shape; and
- a large fraction $F_L$ is a quadrilateral-like shape, a monoclinic-like shape and/or a sphere-like shape, wherein the small fraction is less than 50 wt.% and the large fraction is more than 50 wt.%, the sum of $F_s$+$F_L$ being equal to 100 wt.%.

In some embodiments, the $NH_4FSI$ salt in the dispersion is in a form of a solvate, possibly in a crystallized form, comprising:

- 50 to 99.9 wt.%, of the $NH_4FSI$ salt, and
- 0.1 to 50 wt.%, of solvent $S_2$, which is selected from the group consisting of cyclic and acyclic ethers.

In some embodiments, the NH4FSI salt in the dispersion may be a solvate comprising from 50 to 99.5 wt.%, from 50 to 99 wt.%, or from 50 to 98 wt.% of the $NH_4FSI$ salt. The $NH_4FSI$ salt in the dispersion may also be a solvate comprising from 50.5 to 99.9 wt.%, from 51 to 99 wt.%, or from 52 to 98 wt.% of the $NH_4FSI$ salt. The $NH_4FSI$ salt in the dispersion may even be a solvate comprising from 55 to 95 wt.%, from 60 to 90 wt.%, or from 63 to 83 wt.% of the $NH_4FSI$ salt.

In some embodiments, the $NH_4FSI$ salt in the dispersion may be a solvate comprising from 0.1 to 49.5 wt.%, from 0.1 to 49 wt.%, or from 0.1 to 48 wt.% of the solvent $S_2$. The $NH_4FSI$ salt in the dispersion may also be a solvate comprising from 0.5 to 50 wt.%, from 1 to 50 wt.%, or from 2 to 50 wt.% of the solvent $S_2$. The $NH_4FSI$ salt in the dispersion may even be a solvate comprising from 5 to 45 wt.%, from 10 to 40 wt.%, or from 17 to 37 wt.% of the solvent $S_2$.

The dry dispersion of the present invention may be obtained by a process comprising the steps of:

i) providing a crude salt of $NH_4FSI$;
ii) dissolving the crude salt of $NH_4FSI$ in at least one solvent $S_1$;
iii) crystallizing the crude salt of $NH_4FSI$ by means of at least one solvent $S_2$; and
iv) separating the $NH_4FSI$ salt from at least part of the solvents S1 and $S_2$, preferably by filtration.

The crude salt of $NH_4FSI$ may comprise from 80 to 97 wt.% of the salt of $NH_4FSI$, preferably from 85 to 95 wt.%, more preferably from 90 to 95 wt.%. The crude salt of $NH_4FSI$ also comprises impurities such as $FSO_3^-$, $F^-$, $ClO^-$, $SO_4^{2-}$, $NH_2SO_3^-$, $NH_4[N(SO_3H)(SO_2F)]$ (OFSI), and/or $NH_4[N(SO_3H)_2]$ (OSI).

The weight content of these impurities may vary between 3 and 20 wt.%, for example between 5 and 15 wt.% or between 10 and 5 wt.%.

In some embodiments, the solvent $S_1$ is selected from the group consisting of acetonitrile, valeronitrile, adiponitrile, benzonitrile, methanol, ethanol, 1-propanol, 2-propanol, 2,2,2,-trifluoroethanol, n-butyl acetate, isopropyl acetate, and mixtures thereof; preferably 2,2,2,-trifluoroethanol (TFE).

In some other embodiments, the solvent $S_2$ is selected from the group consisting of diethylether, diisopropylether, methyl-t-butylether, dimethoxymethane, 1,2-dimethoxyethane, tetrahydrofuran, 2-methyltetrahydrofuran, 1,3-dioxane, 4-methyl-1,3-dioxane, and 1,4-dioxane, and mixtures thereof; more preferably from the list consisting of diethyl ether, diisopropyl ether, methyl t-butyl ether, 1,2-dimethoxyethane, tetrahydrofuran, 2-methyltetrahydrofuran, dioxane and mixtures thereof; even more preferably being 1,3-dioxane or 1,4-dioxane.

In one preferred embodiment, the dry dispersion is in the form of a solvate, at least partially crystallized, comprising from 0.1 wt.% to 50 wt.% of a solvent $S_2$ (preferably dioxane) and from 50 to 99.9 wt.% of the $NH_4FSI$ salt, such dispersion being obtained by a process comprising the steps of:

i) providing a crude salt of $NH_4FSI$;
ii) dissolving the crude salt of $NH_4FSI$ in at least one solvent $S_1$ (preferably TFE);
iii) crystallizing the crude salt of $NH_4FSI$ by means of at least one solvent $S_2$ (preferably dioxane); and
iv) separating the $NH_4FSI$ salt from at least part of the solvents S1 and $S_2$, preferably by filtration.

In some embodiments, the weight ratio of $S_1/S_2$ in the process from preparing the dispersion of the present invention varies between 1/10 and 10/1, preferably between 1/5 and 5/1, more preferably between 1/2 and 2/1.

The present invention also relates to a process for preparing a bis(fluorosulfonyl)imide (MFSI) salt of formula (II):

$$[F\text{-}SO_2\text{-}N^-\text{-}SO_2\text{-}F],\ M^+ \qquad (II)$$

wherein M is selected from the group consisting of Li, Na and K,
wherein the process comprises reacting the dry dispersion of ammonium bis(fluorosulfonyl)imide ($NH_4FSI$) salt of formula (I) as described in the present disclosure with a compound (C) selected from the group consisting of lithium compounds, sodium compounds and potassium compounds.

In some embodiments, the compound (C) is a lithium compound, preferably selected from the group consisting of lithium hydroxide LiOH, lithium hydroxide hydrate $LiOH.H_2O$, lithium carbonate $Li_2CO_3$, lithium hydrogen carbonate $LiHCO_3$, lithium chloride LiCl, lithium fluoride LiF, alkoxide compounds such as $CH_3OLi$ and EtOLi, alkyl lithium compounds such as EtLi, BuLi and t-BuLi, lithium acetate $CH_3COOLi$, and lithium oxalate $Li_2C_2O_4$, more preferably $LiOH.H_2O$ or $Li_2CO_3$.

The present invention also relates to a dry dispersion of a bis(fluorosulfonyl)imide (MFSI) salt of formula (II):

$$[F\text{-}SO_2\text{-}N^-\text{-}SO_2\text{-}F],\ M^+ \qquad (II)$$

wherein M is selected from the group consisting of Li, Na and K,
wherein the dry dispersion comprises at least two particle size fractions.

The dry dispersion of MFSI salt may be obtained from the process described above.

The MFSI salt described herein is preferably LiFSI.

In some embodiments, the dry dispersion of MFSI salt contains at least 1 ppm of solvent $S_2$. The dry dispersion of MFSI salt may for example contain from 1 to 100 ppm of solvent $S_2$, from 2 to 80 ppm, from 3 to 60 ppm, from 4 to 40 ppm or from 5 to 25 ppm of solvent $S_2$.

Should the disclosure of any patents, patent applications, and publications conflict with the description of the present application to the extent that it may render a term unclear, the present description shall take precedence.

The disclosure will be now described in more detail with reference to the following examples, whose purpose is merely illustrative and not intended to limit the scope of the disclosure.

## EXAMPLES

The PSD of two dispersions of FSI salts were analysed. The first one is a dispersion of $NH_4FSI$ salts according to

the present invention (powder #1). The second one is a dispersion of LiFSI salts commercially available as IONEL® from Nippon Shokubai (powder #2).

Powder #1 - Dispersion of a $NH_4FSI$ in the form of a solvate

The inventive dispersion was prepared according to the following process:
A 500 mL reactor with stirring means, a double jacket for thermal regulation, a condenser, a pressure regulator means and a liquid or gas addition means was used. 400 g of ethyl methyl carbonate (EMC) were introduced in the reactor at room temperature. 81 g of anhydrous $NH_4F$ was suspended in the reactor. 77 g of molten HCSI was then added gradually during 1 hour, and the mixture was heated at 80°C under stirring for 15 hours. The reaction mixture was then cooled to room temperature and 25 g of $NH_4OH$ (aq) (ammonia water) was added. The reaction mixture containing $NH_4FSI$ salt was stirred at room temperature for 1h and then filtered.

332 g of this crude $NH_4FSI$ was concentrated to 48 g. 300 g of 2,2,2-trifluoroethanol (TFE) was added into the solution and concentrated into a 170 g solution; this operation was repeated twice. The 170 g solution was then transferred into the 3-necked flask. Appropriate stirring and temperature were set up to ensure a complete dissolution of $NH_4FSI$ in TFE. Then, 139.5 g of 1,4-dioxane was added dropwise to the reactor in 3h. After completion of the 1,4-dioxane addition, the solution temperature was kept at 60°C for another period of 2h. The mixture was then allowed to cool down to room temperature and stirred overnight. The flask content was then filtrated using a 0.22 μm PTFE membrane to collect the solid $NH_4FSI$. The collected solid cake was washed with 60 g of 1,4-dioxane. The collected solid was dried using the rotary evaporator under 70°C at 20 mbar until there was no more solvent evaporation to afford 28.8 g of a white solid. This white solid is a crystallised solvate of NH4FSI ($NH_4FSI$-S) comprising 80 wt.% of $NH_4FSI$ and 20 wt.% of 1,4-dioxane.

The recrystallization yield, as calculated by the following formula, is 48%.

$$\text{Yield} = \frac{weight\ (NH_4FSI\ in\ NH_4FSI - S)}{weight\ (Crude\ NH_4FSI)}$$

**Test methods**

PSD

The PSD was determined by laser diffraction method (HELOS CUVETTE). The diffraction information (raw data) was converted to the cumulative distribution as well as the normalized differential distribution by the SYMPATEC® software provided by device manufacturer. The samples, meanwhile, were prepared in the glove box. 0.1 mg of solid sample were dispersed in 2.5 mL of n-hexane to give a final particle mass fraction of about 4%.

Shape

Particle morphology of solid samples was analyzed by optical microscopy (bright field). The samples were prepared in the glove box. 0.1 mg of solid sample were mixed with paraffin on the slide glass, covered with a cover glass, and then sealed by UV curing.

**Results**

Powder #1

Fig. 1 shows the bimodal particle size distribution (PSD) of the dry dispersion.

| | dispersion | small-size fraction | large-size fraction |
|---|---|---|---|
| $d_{10}$-value (μm) | 81 | 59 | 157 |
| $d_{50}$-value (μm) | 164 | 100 | 220 |
| $d_{90}$-value (μm) | 285 | 141 | 283 |
| $d_{99}$-value (μm) | 351 | *nd* | *nd* |
| particle diameter Dp at the peak (μm) | *nd* | 97 | 229 |

**Volume ratio** of the small particles to the large particles: 1/1

The **particle morphology** was mixed with a majority of quadrilateral-like, monoclinic-like and sphere-like particles, as well as a small portion of rod-like and needle-like shapes.

Powder #2

| | dispersion |
|---|---|
| $d_{10}$-value (μm) | 138 |
| $d_{50}$-value (μm) | 355 |
| $d_{90}$-value (μm) | 561 |

**Claims**

**1.** A dry dispersion of ammonium bis(fluorosulfonyl)imide ($NH_4FSI$) salt of formula (I):

$$[F\text{-}SO_2\text{-}N^-\text{-}SO_2\text{-}F],\ NH_4^+ \qquad (I)$$

wherein the $NH_4FSI$ salt is possibly in a form of a solvate comprising:

- 50 to 99.9 wt.%, of the $NH_4FSI$ salt, and
- 0.1 to 50 wt.%, of solvent $S_2$, which is selected from the group consisting of cyclic and acyclic ethers,

wherein the dry dispersion comprises at least two particle size fractions, a small-size fraction and a large-size fraction.

**2.** The dispersion of claim 1, wherein:

- the small-size fraction has a $d_{50}$-value of less than 120 μm;
- the large-size fraction has a $d_{50}$-value of more than 200 μm; and/or
- the volume ratio of the small particles to the large particles is from 5:95 to 95:5,

as determined by laser diffraction in n-hexane.

**3.** The dispersion of any of the preceding claims, wherein the dry dispersion is such that:

- its $d_{10}$-value is not less than 20 μm, preferably between 30 and 100 μm;
- its $d_{50}$-value is between 140 and 190 μm, preferably between 145 and 185 μm;
- its $d_{90}$-value is between 260 and 300 μm, preferably between 265 and 290 μm; and/or
- its $d_{99}$-value is between 300 and 400 μm, preferably between 310 and 380 μm

as determined by laser diffraction in n-hexane.

**4.** The dispersion of any of the preceding claims, wherein the small-size fraction of the dry dispersion is such that :

- its $d_{10}$-value is not less than 20 μm, preferably between 30 and 100 μm, and/or
- its $d_{50}$-value is between 80 and 115 μm,

as determined by laser diffraction in n-hexane.

**5.** The dispersion of any of the preceding claims, wherein the large-fraction of the dry dispersion is such that:

- its $d_{50}$-value is between 200 and 250 μm;
- its $d_{90}$-value is between 260 and 300 μm; and/or
- its $d_{99}$-value is between 300 and 400 μm,

as determined by laser diffraction in n-hexane.

**6.** The dispersion of any of the preceding claims, having a shape being at least one selected from the group consisting of a quadrilateral-like shape, a monoclinic-like shape, a sphere-like shape, a rod-like shape, a needle-like shape and mixtures thereof.

**7.** The dispersion of claim 6, having a shape being at least two selected from the group consisting of a quadrilateral-like shape, a monoclinic-like shape, a sphere-like shape, a rod-like shape, a needle-like shape and mixtures thereof.

**8.** The dispersion of claim 6 or 7, having a shape such that:

- a small fraction $F_s$ is a rod-like shape and/or a needle-like shape; and
- a large fraction $F_L$ is a quadrilateral-like shape, a monoclinic-like shape and/or a sphere-like shape, wherein the small fraction is less than 50 wt.% and the large fraction is more than 50 wt.%, the sum of $F_s$+$F_L$ being equal to 100 wt.%.

**9.** The dispersion of any of the preceding claims, wherein the $NH_4FSI$ salt is a solvate comprising a solvent $S_2$ is selected from the group consisting of diethylether, diisopropylether, methyl-t-butylether, dimethoxymethane, 1,2-dimethoxyethane, tetrahydrofuran, 2-methyltetrahydrofuran, 1,3-dioxane, 4-methyl-1,3-dioxane, and 1,4-dioxane, and mixtures thereof; more preferably from the list consisting of diethyl ether, diisopropyl ether, methyl t-butyl ether, 1,2-dimethoxyethane, tetrahydrofuran, 2-methyltetrahydrofuran, dioxane and mixtures thereof; even more preferably being 1,3-dioxane or 1,4-dioxane.

**10.** A process for preparing the dispersion of any one of claims 1 to 9, comprising the steps of:

i) providing a crude salt of $NH_4FSI$;
ii) dissolving the crude salt of $NH_4FSI$ in at least one solvent $S_1$;
iii) crystallizing the crude salt of $NH_4FSI$ by means of at least one solvent $S_2$; and
iv) separating the $NH_4FSI$ salt from at least part of the solvents $S_1$ and $S_2$, preferably by filtration.

**11.** The process of claim 10, wherein:

- $S_1$ is selected from the group consisting of acetonitrile, valeronitrile, adiponitrile, benzonitrile, methanol, ethanol, 1-propanol, 2-propanol, 2,2,2,-trifluoroethanol, n-butyl acetate, isopropyl acetate, and mixtures thereof;
- $S_2$ is selected from the group consisting of diethylether, diisopropylether, methyl-t-butylether, dimethoxymethane, 1,2-dimethoxyethane, tetrahydrofuran, 2-methyltetrahydrofuran, 1,3-dioxane, 4-methyl-1,3-dioxane, and 1,4-dioxane, and mixtures thereof; and/or
- the weight ratio of $S_1/S_2$ varies between 1/10 and 10/1.

**12.** A process for preparing a bis(fluorosulfonyl)imide (MFSI) salt of formula (II):

$$[F\text{-}SO_2\text{-}N^-\text{-}SO_2\text{-}F],\ M^+ \qquad (II)$$

wherein M is selected from the group consisting of Li, Na and K,
wherein the process comprises reacting the dry dispersion of ammonium bis(fluorosulfonyl)imide ($NH_4FSI$) salt of formula (I) of any one of claims 1 to 9 with a compound (C) selected from the group consisting of lithium compounds, sodium compounds and potassium compounds.

**13.** The process of claim 12, wherein the compound (C) is a lithium compound, preferably selected from the group consisting of lithium hydroxide LiOH, lithium hydroxide hydrate $LiOH.H_2O$, lithium carbonate $Li_2CO_3$, lithium hydrogen carbonate $LiHCO_3$, lithium chloride LiCl, lithium fluoride LiF, alkoxide compounds such as $CH_3OLi$ and EtOLi, alkyl lithium compounds such as EtLi, BuLi and t-BuLi, lithium acetate $CH_3COOLi$, and lithium oxalate $Li_2C_2O_4$, more

preferably $LiOH.H_2O$ or $Li_2CO_3$.

**14.** A dry dispersion of a bis(fluorosulfonyl)imide (MFSI) salt of formula (II):

$$[F\text{-}SO_2\text{-}N^-\text{-}SO_2\text{-}F],\ M^+ \qquad (II)$$

wherein M is selected from the group consisting of Li, Na and K,
wherein the dry dispersion comprises at least two particle size fractions.

**15.** The dispersion of claim 14, wherein:

- the dispersion is obtainable from the process of any of claims 11 to 13, and/or
- the dispersion contains at least 1 ppm of solvent $S_2$.

**Patentansprüche**

**1.** Trockene Dispersion von Ammoniumbis(fluorsulfonyl)imid($NH_4FSI$)-Salz der Formel (I):

$$[F\text{-}SO_2\text{-}N^-\text{-}SO_2\text{-}F],\ NH_4^+ \qquad (I)$$

wobei das $NH_4FSI$-Salz gegebenenfalls in einer Form eines Solvats vorliegt, das umfasst:

- 50 bis 99,9 Gew.-% an dem $NH_4FSI$-Salz und
- 0,1 bis 50 Gew.-% Lösungsmittel $S_2$, das ausgewählt ist aus der Gruppe bestehend aus cyclischen und acyclischen Ethern,

wobei die trockene Dispersion wenigstens zwei Partikelgrößenfraktionen, eine Fraktion mit kleiner Größe und eine Fraktion mit großer Größe, umfasst.

**2.** Dispersion nach Anspruch 1, wobei:

- die Fraktion mit kleiner Größe einen $d_{50}$-Wert von kleiner als 120 μm aufweist;
- die Fraktion mit großer Größe einen $d_{50}$-Wert von größer als 200 μm aufweist; und/oder
- das Volumenverhältnis der kleinen Partikel zu den großen Partikeln von 5:95 bis 95:5 beträgt,

wie bestimmt durch Laserbeugung in n-Hexan.

**3.** Dispersion nach einem der vorstehenden Ansprüche, wobei die trockene Dispersion so ist, dass:

- ihr $d_{10}$-Wert nicht kleiner als 20 μm ist, vorzugsweise zwischen 30 und 100 μm liegt;
- ihr $d_{50}$-Wert zwischen 140 und 190 μm, vorzugsweise zwischen 145 und 185 μm, liegt;
- ihr $d_{90}$-Wert zwischen 260 und 300 μm, vorzugsweise zwischen 265 und 290 μm, liegt; und/oder
- ihr $d_{99}$-Wert zwischen 300 und 400 μm, vorzugsweise zwischen 310 und 380 μm, liegt

wie bestimmt durch Laserbeugung in n-Hexan.

**4.** Dispersion nach einem der vorstehenden Ansprüche, wobei die Fraktion mit kleiner Größe der trockenen Dispersion so ist, dass:

- ihr $d_{10}$-Wert wenigstens 20 μm beträgt, vorzugsweise zwischen 30 und 100 μm liegt, und/oder
- ihr $d_{50}$-Wert zwischen 80 und 115 μm liegt,

wie bestimmt durch Laserbeugung in n-Hexan.

**5.** Dispersion nach einem der vorstehenden Ansprüche, wobei die Fraktion mit großer Größe der trockenen Dispersion

so ist, dass:

- ihr $d_{90}$-Wert zwischen 200 und 250 μm liegt;
- ihr $d_{90}$-Wert zwischen 260 und 300 μm liegt; und/oder
- ihr $d_{99}$-Wert zwischen 300 und 400 μm liegt,

wie bestimmt durch Laserbeugung in n-Hexan.

**6.** Dispersion nach einem der vorstehenden Ansprüche mit einer Form, die wenigstens eine ausgewählt aus der Gruppe bestehend aus einer viereckartigen Form, einer monoklinartigen Form, einer kugelartigen Form, einer stäbchenartigen Form, einer nadelartigen Form und Gemischen davon ist.

**7.** Dispersion nach Anspruch 6 mit einer Form, die wenigstens zwei ausgewählt aus der Gruppe bestehend aus einer viereckartigen Form, einer monoklinartigen Form, einer kugelartigen Form, einer stäbchenartigen Form, einer nadelartigen Form und Gemischen davon ist.

**8.** Dispersion nach Anspruch 6 oder 7 mit einer solchen Form, dass:

- eine kleine Fraktion $F_s$ eine stäbchenartige Form und/oder eine nadelartige Form aufweist; und
- eine großer Fraktion $F_L$ eine viereckartige Form, eine monoklinartige Form und/oder eine kugelartige Form aufweist, wobei die kleine Fraktion weniger als 50 Gew.-% und die große Fraktion mehr als 50 Gew.-% ist, wobei die Summe von $F_s$+$F_L$ gleich 100 Gew.-% ist.

**9.** Dispersion nach einem der vorstehenden Ansprüche, wobei das $NH_4$FSI-Salz ein Solvat ist, das ein Lösungsmittel $S_2$ ausgewählt aus der Gruppe bestehend aus Diethylether, Diisopropylether, Methyl-t-butylether, Dimethoxymethan, 1,2-Dimethoxyethan, Tetrahydrofuran, 2-Methyltetrahydrofuran, 1,3-Dioxan, 4-Methyl-1,3-dioxan und 1,4-Dioxan und Gemische davon; bevorzugter aus der Liste bestehend aus Diethylether, Diisopropylether, Methyl-t-butylether, 1,2-Dimethoxyethan, Tetrahydrofuran, 2-Methyltetrahydrofuran, Dioxan und Gemischen davon; noch bevorzugter 1,3-Dioxan oder 1,4-Dioxan, umfasst.

**10.** Verfahren zur Herstellung der Dispersion nach einem der Ansprüche 1 bis 9, umfassend die Schritte:

i) Bereitstellen eines rohen Salzes von $NH_4$FSI;
ii) Lösen des rohen Salzes von $NH_4$FSI in wenigstens einem Lösungsmittel $S_1$;
iii) Kristallisieren des rohen Salzes von $NH_4$FSI mithilfe wenigstens eines Lösungsmittels $S_2$; und
iv) Abtrennen des $NH_4$FSI-Salzes von wenigstens einem Teil der Lösungsmittel $S_1$ und $S_2$, vorzugsweise durch Filtration.

**11.** Verfahren nach Anspruch 10, wobei:

- $S_1$ ausgewählt ist aus der Gruppe bestehend aus Acetonitril, Valeronitril, Adiponitril, Benzonitril, Methanol, Ethanol, 1-Propanol, 2-Propanol, 2,2,2,-Trifluorethanol, n-Butylacetat, Isopropylacetat und Gemischen davon;
- $S_2$ ausgewählt ist aus der Gruppe bestehend aus Diethylether, Diisopropylether, Methyl-t-butylether, Dimethoxymethan, 1,2-Dimethoxyethan, Tetrahydrofuran, 2-Methyltetrahydrofuran, 1,3-Dioxan, 4-Methyl-1,3-dioxan und 1,4-Dioxan, und Gemischen davon; und/oder
- das Gewichtsverhältnis von $S_1$/$S_2$ zwischen 1/10 und 10/1 variiert.

**12.** Verfahren zur Herstellung eines Bis (fluorsulfonyl)imid(MFSI)-Salzes der Formel (II):

$$[F\text{-}SO_2\text{-}N^-\text{-}SO_2\text{-}F],\ M^+ \qquad (II)$$

wobei M ausgewählt ist aus der Gruppe bestehend aus Li, Na und K,
wobei das Verfahren das Umsetzen der trockenen Dispersion von Ammoniumbis(fluorsulfonyl)imid($NH_4$FSI)-Salz der Formel (I) nach einem der Ansprüche 1 bis 9 mit einer Verbindung (C) ausgewählt aus der Gruppe bestehend aus Lithiumverbindungen, Natriumverbindungen und Kaliumverbindungen umfasst.

**13.** Verfahren nach Anspruch 12, wobei die Verbindung (C) eine Lithiumverbindung ist, vorzugsweise ausgewählt aus der Gruppe bestehend aus Lithiumhydroxid LiOH, Lithiumhydroxidhydrat $LiOH.H_2O$, Lithiumcarbonat $Li_2CO_3$, Lithium-

hydrogencarbonat $LiHCO_3$, Lithiumchlorid LiCl, Lithiumfluorid LiF, Alkoxidverbindungen, wie z.B. $CH_3OLi$ und EtOLi, Alkyllithiumverbindungen, wie z.B. EtLi, BuLi und t-BuLi, Lithiumacetat $CH_3COOLi$, und Lithiumoxalat $Li_2C_2O_4$, bevorzugter $LiOH.H_2O$ oder $Li_2CO_3$.

**14.** Trockene Dispersion eines Bis(fluorsulfonyl)imid(MFSI)-Salzes der Formel (II):

$$[F\text{-}SO_2\text{-}N^-\text{-}SO_2\text{-}F],\ M^+ \qquad (II)$$

wobei M ausgewählt ist aus der Gruppe bestehend aus Li, Na und K,
wobei die trockene Dispersion wenigstens zwei Partikelgrößenfraktionen umfasst.

**15.** Dispersion nach Anspruch 14, wobei:

- die Dispersion erhältlich ist durch das Verfahren nach einem der Ansprüche 11 bis 13 und/oder
- die Dispersion wenigstens 1 ppm Lösungsmittel $S_2$ enthält.

**Revendications**

**1.** Dispersion sèche de sel de bis(fluorosulfonyl)imide d'ammonium ($NH_4FSI$) de formule (I) :

$$[F\text{-}SO_2\text{-}N^-\text{-}SO_2\text{-}F],\ NH_4^+ \qquad (I)$$

dans laquelle le sel de $NH_4FSI$ est possiblement sous une forme d'un solvate comprenant :

- 50 à 99,9 % en poids du sel de $NH_4FSI$, et
- 0,1 à 50 % en poids de solvant $S_2$, choisi dans le groupe constitué des éthers cycliques et acycliques,

dans laquelle la dispersion sèche comprend au moins deux fractions de taille de particule, une fraction de petite taille et une fraction de grande taille.

**2.** Dispersion selon la revendication 1, dans laquelle :

- la fraction de petite taille a une valeur $d_{50}$ inférieure à 120 $\mu$m ;
- la fraction de grande taille a une valeur $d_{50}$ supérieure à 200 $\mu$m ; et/ou
- le rapport volumique entre les petites particules et les grosses particules est de 5:95 à 95:5,

comme déterminé par diffraction laser dans le n-hexane.

**3.** Dispersion selon l'une quelconque des revendications précédentes, dans laquelle la dispersion sèche est telle que :

- sa valeur $d_{10}$ n'est pas inférieure à 20 $\mu$m, préférablement comprise entre 30 et 100 $\mu$m ;
- sa valeur $d_{50}$ est comprise entre 140 et 190 $\mu$m, préférablement comprise entre 145 et 185 $\mu$m ;
- sa valeur $d_{90}$ est comprise entre 260 et 300 $\mu$m, préférablement comprise entre 265 et 290 $\mu$m ; et/ou
- sa valeur $d_{99}$ est comprise entre 300 et 400 $\mu$m, préférablement comprise entre 310 et 380 $\mu$m

comme déterminé par diffraction laser dans le n-hexane.

**4.** Dispersion selon l'une quelconque des revendications précédentes, dans laquelle la fraction de petite taille de la dispersion sèche est telle que :

- sa valeur $d_{10}$ n'est pas inférieure à 20 $\mu$m, préférablement comprise entre 30 et 100 $\mu$m, et/ou
- sa valeur $d_{50}$ est comprise entre 80 et 115 $\mu$m,

comme déterminé par diffraction laser dans le n-hexane.

**5.** Dispersion selon l'une quelconque des revendications précédentes, dans laquelle la fraction de grande taille de la dispersion sèche est telle que :

- sa valeur $d_{50}$ est comprise entre 200 et 250 µm ;
- sa valeur $d_{90}$ est comprise entre 260 et 300 µm ; et/ou
- sa valeur $d_{99}$ est comprise entre 300 et 400 µm,

comme déterminé par diffraction laser dans le n-hexane.

**6.** Dispersion selon l'une quelconque des revendications précédentes, ayant au moins une forme choisie dans le groupe constitué d'une forme de type quadrilatérale, d'une forme de type monoclinique, d'une forme de type sphère, d'une forme de type tige, d'une forme de type aiguille et de leurs mélanges.

**7.** Dispersion selon la revendication 6, ayant au moins deux formes choisies dans le groupe constitué d'une forme de type quadrilatérale, d'une forme de type monoclinique, d'une forme de type sphère, d'une forme de type tige, d'une forme de type aiguille et de leurs mélanges.

**8.** Dispersion selon la revendication 6 ou 7, ayant une forme telle que :

- une petite fraction $F_s$ est une forme de type tige et/ou de type aiguille ; et
- une grande fraction $F_L$ est une forme de type quadrilatérale, une forme de type monoclinique et/ou une forme de type sphère, la petite fraction étant inférieure à 50 % en poids et la grande fraction étant supérieure à 50 % en poids, la somme de $F_s$+$F_L$ étant égale à 100 % en poids.

**9.** Dispersion selon l'une quelconque des revendications précédentes, dans laquelle le sel de $NH_4FSI$ est un solvate comprenant un solvant $S_2$ choisi dans le groupe constitué du diéthyléther, du diisopropyléther, du méthyl-t-butyléther, du diméthoxyméthane, du 1,2-diméthoxyéthane, du tétrahydrofurane, du 2-méthyltétrahydrofurane, du 1,3-dioxane, du 4-méthyl-1,3-dioxane et du 1,4-dioxane, et de leurs mélanges ; plus préférablement dans la liste constituée du diéthyléther, du diisopropyléther, du méthyl-t-butyléther, du 1,2-diméthoxyéthane, du tétrahydrofurane, du 2-méthyltétrahydrofurane, du dioxane et de leurs mélanges ; encore plus préférablement étant le 1,3-dioxane ou le 1,4-dioxane.

**10.** Procédé de préparation de la dispersion selon l'une quelconque des revendications 1 à 9, comprenant les étapes de :

i) fourniture d'un sel brut de $NH_4FSI$ ;
ii) dissolution du sel brut de $NH_4FSI$ dans au moins un solvant $S_1$ ;
iii) cristallisation du sel brut de $NH_4FSI$ au moyen d'au moins un solvant $S_2$ ; et
iv) séparation du sel de $NH_4FSI$ d'au moins une partie des solvants $S_1$ et $S_2$, de préférence par filtration.

**11.** Procédé selon la revendication 10, dans lequel :

- $S_1$ est choisi dans le groupe constitué de l'acétonitrile, du valéronitrile, de l'adiponitrile, du benzonitrile, du méthanol, de l'éthanol, du 1-propanol, du 2-propanol, du 2,2,2-trifluoroéthanol, de l'acétate de n-butyle, de l'acétate d'isopropyle et de leurs mélanges ;
- $S_2$ est choisi dans le groupe constitué du diéthyléther, du diisopropyléther, du méthyl-t-butyléther, du diméthoxyméthane, du 1,2-diméthoxyéthane, du tétrahydrofurane, du 2-méthyltétrahydrofurane, du 1,3-dioxane, du 4-méthyl-1,3-dioxane et du 1,4-dioxane, et de leurs mélanges ; et/ou
- le rapport pondéral $S_1/S_2$ varie entre 1/10 et 10/1.

**12.** Procédé de préparation d'un sel de bis(fluorosulfonyl)imide (MFSI) de formule (II) :

$$[F\text{-}SO_2\text{-}N^-\text{-}SO_2\text{-}F],\ M^+ \qquad (II)$$

dans laquelle M est choisi dans le groupe constitué de Li, Na et K,
dans lequel le procédé comprend la mise en réaction de la dispersion sèche du sel de bis(fluorosulfonyl)imide d'ammonium ($NH_4FSI$) de formule (I) selon l'une quelconque des revendications 1 à 9 avec un composé (C) choisi dans le groupe constitué des composés du lithium, des composés du sodium et des composés du potassium.

**13.** Procédé selon la revendication 12, dans lequel le composé (C) est un composé du lithium, de préférence choisi dans le groupe constitué de l'hydroxyde de lithium LiOH, de l'hydroxyde de lithium hydraté $LiOH.H_2O$, du carbonate de

lithium $Li_2CO_3$, de l'hydrogénocarbonate de lithium $LiHCO_3$, du chlorure de lithium LiCl, du fluorure de lithium LiF, des composés de type alcoxyde tels que $CH_3OLi$ et EtOLi, des composés d'alkyllithium tels que EtLi, Buli et t-BuLi, de l'acétate de lithium $CH_3COOLi$ et de l'oxalate de lithium $Li_2C_2O_4$, plus préférablement $LiOH.H_2O$ ou $Li_2CO_3$.

**14.** Dispersion sèche d'un sel de bis(fluorosulfonyl)imide (MFSI) de formule (II) :

$$[F\text{-}SO_2\text{-}N^-\text{-}SO_2\text{-}F],\ M^+ \qquad (II)$$

dans laquelle M est choisi dans le groupe constitué de Li, Na et K,
dans laquelle la dispersion sèche comprend au moins deux fractions de taille de particule.

**15.** Dispersion selon la revendication 14, dans laquelle :

- la dispersion peut être obtenue par le procédé selon l'une quelconque des revendications 11 à 13, et/ou
- la dispersion contient au moins 1 ppm de solvant $S_2$.

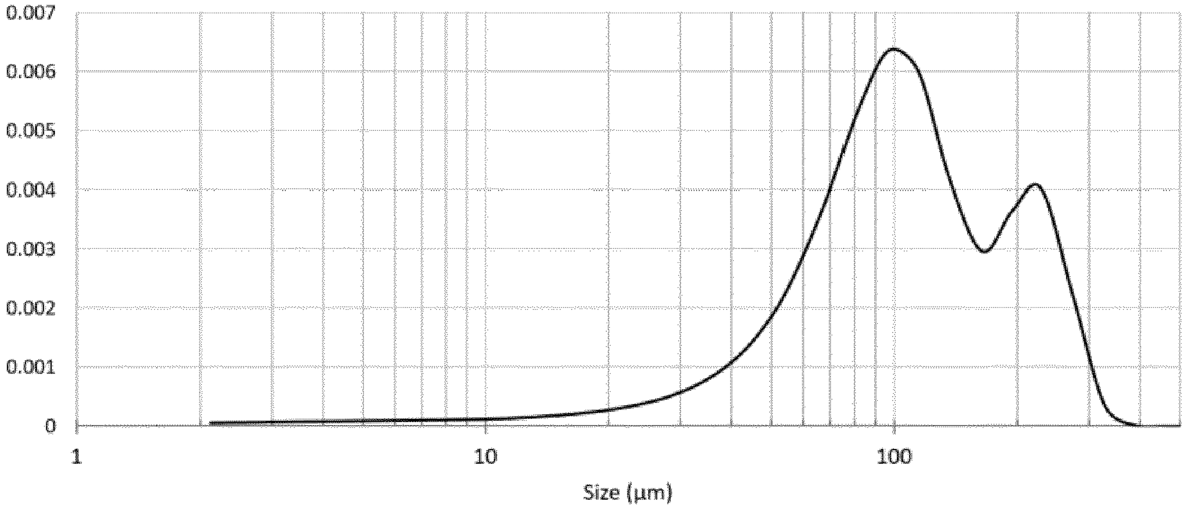


Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017090877 A1
- WO 2018147195 A1
- US 20160289074 A1
- US 20190276311 A1